# EUROPÄISCHE PATENTSCHRIFT

(11) **EP 0 465 479 B1**
(45) Veröffentlichungstag und Bekanntmachung des Hinweises auf die Patenterteilung: **02.06.1993**
(21) Anmeldenummer: 90904247.5
(22) Anmeldetag: 09.03.1990
(51) Int. Cl.: F23G 5/04, F23G 7/00, C02F 11/06

(54) **VERFAHREN ZUR VERWERTUNG VON KLÄRSCHLAMM**
A METHOD OF REPROCESSING SEWAGE SLUDGE
PROCEDE DE TRANSFORMATION DE BOUES DE CURAGE

(30) Priorität: 30.03.1989 DE 3910215
(43) Veröffentlichungstag der Anmeldung: 15.01.1992
(73) Patentinhaber: SAARBERGWERKE AKTIENGESELLSCHAFT, 66104 Saarbrücken (DE)
(72) Erfinder: SPLIETHOFF, Heinz, D-6605 Friedrichsthal (DE)
(86) Internationale Anmeldenummer: DE9000175
(87) Internationale Veröffentlichungsnummer: WO9012249

(56) Entgegenhaltungen:
- EP-A- 0 305 779
- DE-A- 3 537 595
- DE-A- 3 542 004
- GB-A- 1 577 543
- US-A- 4 583 470

## Beschreibung

Die Erfindung betrifft ein Verfahren zur Verwertung von Klärschlamm, bei dem der Klärschlamm getrocknet und verbrannt wird, wobei die Trocknung unter Nutzung von in einer Feuerungsleistungszone erzeugter Wärme erfolgt und wobei in einem der Feuerungsleistungszone nachgeschalteten Feuerraum zur Reduktion der in der Feuerungsleistungszone gebildeten Stickoxide ein Brennstoff verbrannt wird.

Aufgrund seiner organischen Bestandteile erfolgt die Verwertung von Klärschlamm meist durch Verbrennung, wobei sich der sehr hohe Wassergehalt jedoch für den Verbrennungsprozeß als sehr hinderlich erweist.

Es ist daher bereits vorgeschlagen worden, den Klärschlamm vor seiner Verbrennung einer mechanischen Teilentwässerung zu unterziehen oder aber den Klärschlamm mit entsprechenden Mengen eines trockenen Brennstoffes zu vermischen. Beide Methoden haben den Nachteil, daß die für die Verdampfung der immer noch erheblichen Menge Restwasser benötigte Wärme bei der Verbrennung in nachteiliger Weise auf unnötig hohem Temperaturniveau zur Verfügung gestellt wird.

Es ist daher auch bereits bekannt geworden, den Klärschlamm vor seiner Verbrennung einer thermischen Trocknung zu unterziehen. Hierfür sind u.a. atamosphärische Wirbelbetttrockner vorgeschlagen worden, bei denen die benötigte Wärme für den Trockenprozeß in einer ebenfalls atmosphärischen Wirbelbettfeuerung erzeugt und über einen Zwischenwärmeträgerkreislauf in den Wirbelbetttrockner eingekoppelt wird. Die bei dem Trockenprozeß anfallenden Brüden werden zum Teil als Trägermedium für das Wirbelbett in den Wirbelbetttrockner zurückgeführt und im übrigen außerhalb der Anlage kondensiert und als Brüdenkondensat entsprechend aufbereitet. Nachteilig an diesem bekannten Verfahren ist der relativ hohe apparative Aufwand für verfahrenstypische Anlagenteile, wie Brüdenreinigung, Brüdenverdichtung, Brüdenkondensator, Brüdenkondensataufbereitung und Erzeugung und Übertragung der benötigten Trocknungswärme über beidseitig brüdenberührte Rohrwände.

Ein Verfahren zur Verwertung von Klärschlamm, bei dem der Klärschlamm unter Nutzung von in einer Feuerungsleistungszone erzeugten Wärme getrocknet und anschließend in der Feuerungsleistungszone verbrannt wird, ist aus der DE-A-3537595 bekannt geworden. In dieser Druckschrift wird u.a. vorgeschlagen, die heißen Rauchgase der Feuerungsleistungszone im Wärmetausch mit Frischluft zu kühlen, die dabei gewonnene Heißluft als Wärmeträger im Klärschlammtrockner einzusetzen und sie anschließend in Mischung mit den bei der Trocknung anfallenden Gasen und Dämpfen (Brüden) als Verbrennungsluft der Feuerungsleistungszone zuzuführen. In der genannten Druckschrift ist zudem bereits offenbart, zur Reduktion von Stickoxiden in einem der Feuerungsleistungszone rauchgasseitig nachgeschalteten Feuerraum einen Brennstoff zu verbrennen. Da der Sauerstoffgehalt im Rauchgas selbst nur gering ist, erfolgt die Verbrennung des Brennstoffes mit dem in den Stickoxiden gebundenen Sauerstoff, wodurch diese zu molekularem Stickstoff reduziert werden.

Aus der DE-A-3542004 ist es schließlich bekannt geworden, getrockneten Klärschlamm in einem Brennprozeß zur Herstellung von Zementklinker einzusetzen. Die Trocknung des Klärschlammes erfolgt mit einem Teil der heißen Abluft aus dem Klinkerkühler. Die mit den Brüden beladene Abluft des Trockners wird in die heißeste Zone des Klinkerkühlers zurückgeleitet. In dieser Zone zersetzen sich die organischen Bestandteile in der Abluft aufgrund der hohen Temperaturen.

Dadurch, daß bei beiden Verfahren die Trocknung des Klärschlammes im direkten Wärmetausch mit heißer Luft erfolgt, fallen im Trockner nachteilig große Mengen an verunreinigtem Abgas an, zu deren Weiterbehandlung es eines nicht unerheblichen Aufwandes bedarf. Auch erweist es sich thermodynamisch als ungünstig, daß die Trocknungswärme über die heiße Luft bei viel höheren Temperaturen als für die Trocknung benötigt zur Verfügung gestellt wird.

Der Erfindung liegt die Aufgabe zugrunde, ein einfaches und wirtschaftliches Verfahren zur thermischen Verwertung von Klärschlamm zu entwickeln.

Diese Aufgabe wird bei einem Verfahren der eingangs genannten Art erfindungsgemäß dadurch gelöst, daß die Feuerungsleistungszone im Dampferzeuger eines mit fossilen Brennstoffen betriebenen Kraftwerksprozesses angeordnet ist, daß die Trocknung durch indirekten Wärmetausch mit kondensierendem Dampf aus dem Wasser-Dampf-Kreislauf des Kraftwerksprozesses erfolgt und daß die bei der Trocknung anfallenden Brüden in den Feuerraum zur Reduktion der Stickoxide eingeleitet werden.

Der erfindungsgemäße Vorschlag ermöglicht eine sowohl ökonomisch als auch ökologisch günstige Verwertung von Klärschlamm durch engen Verbund mit einem die fossilen, d.h. mit festen, flüssigen oder gasförmigen Brennstoffen betriebenen Kraftwerksprozeß. So kann die erforderliche Trocknungswärme für den Klärschlamm in einfacher Weise durch Niedrigtemperaturdampf, wie z.B. durch in einer Dampfturbine bereits weitgehend abgearbeiteten Anzapfdampf aus dem Wasser-Dampf-Kreislauf des Kraftwerkes auf dem benötigten Temperaturniveau zur Verfügung gestellt werden. Bei ausreichend großen Klärschlammwassermengen kann zur Einstellung des erforderlichen Temperaturniveaus im Trockner der Druck des als Heizmedium verwendeten Dampfes geregelt werden, beispielsweise mit einer Gegendruckturbine oder auch mit einer geregelten Entnahmekondensationsturbine.

Bei vergleichsweise geringen Klärschlammwassermengen kann der notwendige Heizdampf aus der Entnahme mit dem jeweils geeigneten Temperatur- und Druckniveau entnommen werden. Hierzu kann auch die vorsorgende Entnahme durch Umschaltung gewechselt werden.

Die bei der Trocknung des Klärschlammes anfallenden Brüden enthalten neben dem Wasserdampf noch brennbare Bestandteile und weitere organische Verbindungen, z.B. Stickstoffverbindungen. Nach der Erfindung werden diese Brüden einer der Feuerungsleistungszone des fossilen Kraftwerksprozesses nachgeschalteten Reduktionszone zur Minderung der Stickoxide im Rauchgas des fossilen Kraftwerkes möglicherweise auch zusammen mit weiteren Reduktionsstoffen, wie Reduktionsgasen oder Reduktionsdämpfen, unter genau definierten Bedingungen zugeführt. Sie reagieren mit den im Rauchgas vorhandenen Stickoxiden, wodurch diese zu molekularem Stickstoff reduziert werden. Nach der Reduktionszone erfolgt mit einer Nachverbrennungsluft die Nachverbrennung des Restverbrennlichen. Die nicht brennbaren Bestandteile der Brüden aus der Klärschlammtrocknung verlassen zusammen mit dem Rauchgas die Reduktionszone und werden den nachgeschalteten Einrichtungen des Kraftwerkes zur Rauchgasreinigung zugeführt. Somit entfällt gemäß der Erfindung eine individuelle Brüdenaufbereitung in eigenen Einrichtungen.

Auch bei der Verbrennung des Klärschlammes kann in vorteilhafter Weise die Infrastruktur des vorhandenen mit fossilen Brennstoffen betriebenen Kraftwerksprozesses genutzt werden, wenn nach einem weiteren Merkmal der Erfindung die bei der Verbrennung des getrockneten Klärschlammes anfallenden Rauchgase den Rauchgasen des fossilen Kraftwerksprozesses zugemischt und mit diesen aus dem Kraftwerk abgezogen werden. Sofern der bei der Verbrennung des Klärschlammes anfallende Flugstaub unbedenklich ist, erfolgt die Zumischung der Klärschlammrauchgase zu den Rauchgasen des Kraftwerksprozesses ohne vorherige Staubabscheidung so, daß das Elektrofilter des Kraftwerkes für die Staubabscheidung aus dem Klärschlammrauchgas und die vorhandenen Heizflächen des Dampferzeugers für die Abkühlung der Rauchgase mitgenutzt werden können.

Für den Fall, daß der bei der Verbrennung des Klärschlammes anfallende Flugstaub Bestandteile enthält, die eine Vermischung mit dem Flugstaub aus dem Kaftwerksprozeß nicht zulassen, erfolgt nach einem weiteren Merkmal der Erfindung eine vorherige Abtrennung dieses Staubes. In diesem Falle können immer noch die vorhandenen Einrichtungen zur Entschwefelung und Entstickung der Kraftwerksrauchgase auch für die Rauchgase aus der Klärschlammverbrennung mitgenutzt werden.

Insbesondere dann, wenn die Klärschlammasche oder auch der bei der Klärschlammverbrennung anfallende Flugstaub mit bedenklichen Stoffen, wie z.B. Schwermetallen wie Cadmium und Blei, angereichert ist, kann zur Verbesserung der Entsorgung die Klärschlammasche in einfacher Weise in einer eigenen Brennkammer mit entsprechend hohen Verbrennungstemperaturen und/oder im Wärmetausch mit heißem Rauchgas aus dem fossilen Kraftwerksprozeß eingeschmolzen werden. Eine auf diese Weise keramisierte Asche läßt sich problemlos als Baumaterial oder Verfüllmaterial unterbringen oder ggf. auch deponieren. Nach einem weiteren Merkmal der Erfindung kann das Abkühlen und Einschmelzen der Asche bzw. des Flugstaubes aus der Klärschlammverbrennung bei verschiedenen Temperaturstufen, die durch Quensch oder entsprechende Kühlflächen eingestellt werden können, erfolgen, wodurch Aschebestandteile mit unterschiedlichen Schmelztemperaturen separiert werden können.

Besonders vorteilhaft erweist es sich, wenn nach einem weiteren Merkmal der Erfindung der getrocknete Klärschlamm selbst direkt in der Feuerungsleistungszone eines Kohlekraftwerkes verbrannt wird. Dies wird insbesondere dann der Fall sein, wenn die Feuerungsleistungszone bei Temperaturen betrieben wird, die oberhalb der Schmelztemperaturen der enstehenden Aschebestandteile liegen. Die Aufmahlung des getrockneten Klärschlammes kann dabei je nach Bedarf zusammen mit der Kohle oder auch in einer eigenen Mühle erfolgen.

In diesem Falle wird die Klärschlammasche vollständig oder teilweise zusammen mit der kohlestämmigen Asche verschmolzen und als Granulat aus dem Kraftwerk abgezogen und einer weiteren Verwendung zugeführt. Falls dem Kraftwerksprozeß eine Trockenfeuerung zugrundeliegt, eine Feuerung also, bei der die Temperaturen unterhalb des Ascheschmelzpunktes liegen, wird die gesamte Asche zusammen mit dem Rauchgas aus dem Kessel abgezogen und in den einzelnen Zonen des Elektrofilters abgeschieden. Aufgrund der bekannten Staubabscheidecharakteristik eines Elektrofilters erfolgt dabei in den einzelnen Zonen selbst eine gewisse Klassifizierung des Flugstaubes in Abhängigkeit der jeweiligen Korngröße.

Da in der Regel der Klärschlamm aus den entsprechenden Kläranlagen kontinuierlich anfällt, während fossile Kraftwerksprozesse, z.B. Steinkohlekraftwerke, nur zeitweise, d.h. im Mittellast- oder sogar nur im Spitzenlastbetrieb betrieben werden, erweist es sich nach einem weiteren Merkmal der Erfindung als zweckmäßig zur Entkopplung von Klärschlammverwertung und Kraftwerksbetrieb Speichermöglichkeiten sowohl für den frischen Rohklärschlamm und/oder für den getrockneten Klärschlamm und/oder für dann kondensierte Brüden aus der Klärschlammtrocknung vorzusehen.

Die Erfindung ist durchführbar in Verbindung mit fossilen Kraftwerksprozessen, die mit gasförmigen, flüssigen und festen Brennstoffen betrieben werden. Sie erweist sich jedoch besonders vorteilhaft in Zusammenhang mit einem Kraftwerksprozeß auf Steinkohlebasis.

Das Hauptanwendungsgebiet der Erfindung liegt in der Verwertung von Klärschlamm. Selbstverständlich können aber auch andere stark wasserhaltige Feststoffe, wie z. B. Fluß-, Kanal oder Hafenschlämme entsprechend behandelt werden.

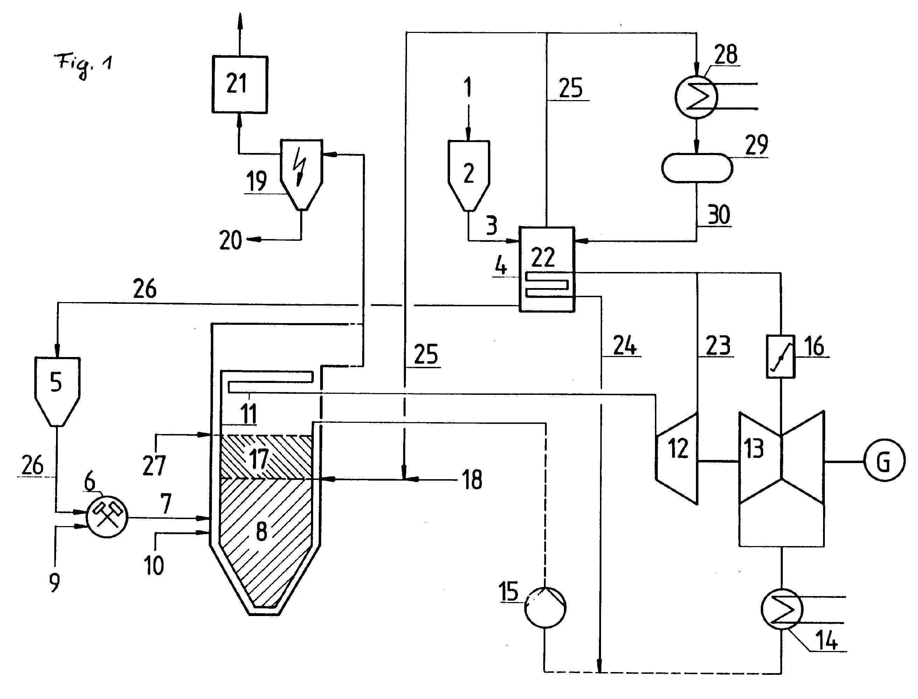

Weitere Erläuterungen zu der Erfindung sind dem in der Figur schematisch dargestellten Ausführungsbeispiel zu entnehmen.

Gemäß dem in der Figur schematisch dargestellten Verfahren wird Rohklärschlamm mit einem Wassergehalt bis zu 80 % und mehr über eine Leitung 1 zunächst einem Zwischenspeicher 2 und dann über eine Leitung 3 einem Trockner 4 zugeführt und in diesem bis zu einem Restwassergehalt unter 20 % getrocknet. Bei dem Trockner 4 kann es sich um einen Wirbelbetttrockner oder um eine andere bekannt gewordene, mit Dampf beheizte Einrichtung handeln. Der getrocknete Klärschlamm wird einem Zwischenspeicher 5 zugeführt. Klärschlamm aus dem Zwischenspeicher 5 wird dann in einer Mühle 6 zusammen mit Kohle, welche über Leitung 9 zugeführt wird, gemahlen, weiter getrocknet und dann über eine Leitung 7 in die Feuerungsleistungszone 8 eines Kohlekraftwerkes eingespeist und in dieser zusammen mit Kohle verbrannt. Die Verbrennungsluft wird über eine Leitung 10 der Feuerungsleistungszone 8, die im vorliegenden Beispiel als Trockenfeuerung ausgebildet ist, zugeführt.

Die in der Feuerungsleistungszone 8 anfallende Verbrennungswärme wird über Heizflächen 11 auf den Wasser-Dampf-Kreislauf des Kraftwerkes mit den Turbinensabschnitten 12 und 13, einem Kondensator 14, einer Speisewasserpumpe 15 sowie hier nicht dargestellten Vorwärmern, Speisewasserbehältern u. a., übertragen.

Die aus der Feuerungsleistungszone 8 abziehenden Rauchgase gelangen in eine Reduktionszone 17 zur Minderung der Stickoxide. Im Anschluß daran passieren die Rauchgase einen hier nicht dargestellten Luftvorwärmer und werden dann in einem Elektrofilter 19 mit einem Ascheaustrag 20 entstaubt.

In hier nur schematisch dargestellten Anlagenteilen 21 wird das Rauchgas von Schadstoffen, wie SO₂ und ggf. NOx, befreit und dann über hier nicht dargestellte Einrichtungen in die Atmosphäre abgeleitet.

Die im Trockner 4 benötigte Trocknungswärme wird über ein Wärmetauschersystem 22 eingekoppelt. Hierzu wird nach dem Turbinenabschnitt 12 über eine Leitung 23 bereits weitestgehend abgearbeiteter Anzapfdampf entnommen, im Wärmetauschersystem 22 kondensiert und über eine Leitung 24 erneut in den Wasser-Dampf-Kreislauf des Kraftwerkes eingespeist. Die aus dem Turbinenabschnitt 12 verbleibende Dampfmenge wird über eine Drosselklappe 16 dem zweiten Turbinenabschnitt 13 zugeleitet. Dabei kann über die Drosselklappe 16 der Druck des über Leitung 23 abgezogenen Dampfes geregelt werden.

Die im Klärschlammtrockner 4 anfallenden Brüden, die neben dem Wasserdampf auch noch brennbare Bestandteile enthalten, werden über eine Leitung 25 der der Feuerungsleistungszone 8 nachgeschalteten Reduktionszone 17 zugeführt. In der Reduktionszone 17 werden die reduzierenden Bestandteile der Brüden zusammen mit weiteren über die Leitung 18 geführten Reduktionsstoffströmen mit den Stickoxiden des Rauchgases zur Reaktion gebracht. Zur Verbrennung der Restverbrennlichen im Rauchgas hinter der Reduktionszone 17 wird über eine Leitung 27 Ausbrandluft zugeführt. Nachdem das Rauchgas seine Wärme übertragen hat, wird es über die Reinigungseinrichtungen 19 und 21 des Kraftwerkes abgezogen.

Zum Ausgleich des Brüdenstromes 25 und der Feuerungsleistung 8 können zeitweise überschüssige Brüden in einem Brüdenkondensator 28 kondensiert, in einem Brüdenkondensatsammelbehälter 29 gespeichert und bei entsprechender Feuerungsleistung über eine Leitung 30 erneut dem Trockner 4 zugeführt und dort verdampft werden.

Trockenklärschlamm und Brüdenkondensat können auch für andere Verwendungen außerhalb des Kraftwerkes aus dem Speicher 5 bzw. dem Kondensatsammelbehälter 29 entnommen werden.

## Patentansprüche

1. Verfahren zur Verwertung von Klärschlamm, bei dem der Klärschlamm getrocknet und verbrannt wird, wobei die Trocknung unter Nutzung von in einer Feuerungsleistungszone erzeugter Wärme erfolgt und wobei in einem der Feuerungsleistungszone nachgeschalteten Feuerraum zur Reduktion der in der Feuerungsleistungszone gebildeten Stickoxide ein Brennstoff verbrannt wird, dadurch gekennzeichnet, daß die Feuerungsleistungszone im Dampferzeuger eines mit fossilen Brennstoffen betriebenen Kraftwerksprozesses angeordnet ist, daß die Trocknung durch indirekten Wärmetausch mit kondensierendem Dampf aus dem Wasser-Dampf-Kreislauf des Kraftwerksprozesses erfolgt und daß die bei der Trocknung anfallenden Brüden in den Feuerraum zur Reduktion der Stickoxide eingeleitet werden.

2. Verfahren nach Anspruch 1, dadurch gekennzeichnet, daß die bei der Verbrennung des Klärschlammes anfallenden staubbeladenen Rauchgase den staubbeladenen Rauchgasen des mit fossilen Brennstoffen betriebenen Kraftwerksprozesses zugemischt werden.

3. Verfahren nach Anspruch 1, dadurch gekennzeichnet, daß die bei der Verbrennung des Klärschlammes anfallenden Rauchgase einer Staubabscheidung unterzogen und den Rauchgasen des mit fossilen Brennstoffen betriebenen Kraftwerksprozesses zugemischt werden.

4. Verfahren nach einem der Ansprüche 1 bis 3, dadurch gekennzeichnet, daß die Verbrennung des Klärschlammes bei Temperaturen oberhalb des Ascheschmelzpunktes erfolgt.

5. Verfahren nach einem der Ansprüche 1 bis 3, dadurch gekennzeichnet, daß die bei der Verbrennung des Klärschlammes anfallende Asche unter Nutzung des Wärmeinhaltes der heißen Rauchgase aus dem fossilen Kraftwerksprozeß eingeschmolzen wird.

6. Verfahren nach den Ansprüchen 4 oder 5, dadurch gekennzeichnet, daß das Einschmelzen der Klärschlammasche in mehreren Temperaturstufen erfolgt.

7. Verfahren nach Anspruch 1, dadurch gekennzeichnet, daß der getrocknete Klärschlamm der Feuerungsleistungszone eines Kohlekraftwerkes zugeführt wird.

8. Verfahren nach Anspruch 7, dadurch gekennzeichnet, daß der getrocknete Klärschlamm zusammen mit dem Brennstoff für den Kraftwerksprozeß oder getrennt hiervon aufgemahlen wird.

9. Verfahren nach einem der Ansprüche 1 bis 8, dadurch gekennzeichnet, daß der zu behandelnde Rohklärschlamm und/ oder der getrocknete Klärschlamm und/oder die bei der Trocknung anfallenden Brüden jeweils einer Zwischenspeicherung unterzogen werden.

## Claims

1. A method of utilizing sewage sludge wherein the sewage sludge is dried and burned, where the drying is carried out using heat generated in a combustion power zone and where a fuel is burned in a combustion chamber downstream of the combustion power zone to reduce the nitrogen oxides formed in the combustion power zone, characterised in that the combustion power zone is arranged in the steam generator of a power plant process operated by fossil fuels, that the drying takes place by indirect heat exchange with condensing steam from the water-steam cycle of the power plant process, and that the vapours produced during the drying process are introduced into the combustion chamber to reduce the nitrogen oxides.

2. A method as claimed in Claim 1, characterised in that the dust-laden flue gases produced during the combustion of the sewage sludge are admixed with the dust-laden flue gases of the power plant process operated by fossil fuels.

3. A method as claimed in Claim 1, characterised in that the flue gases produced during the combustion of the sewage sludge are subjected to a dust separation process and are admixed with the flue gases of the power plant process operated by fossil fuels.

4. A method as claimed in one of Claims 1 to 3, characterised in that the combustion of the sewage sludge is carried out at temperatures above the ash melting point.

5. A method as claimed in one of Claims 1 to 3, characterised in that the ash produced during the combustion of the sewage sludge is melted using the heat content of the hot flue gases from the fossil power plant process.

6. A method as claimed in Claims 4 or 5, characterised in that the melting of the sewage sludge ash takes place in a plurality of temperature stages.

7. A method as claimed in Claim 1, characterised in that the dried sewage sludge is conveyed to the combustion powerzone of a coal power plant.

8. A method as claimed in Claim 7, characterised in that the dried sewage sludge is ground together with the fuel for the power plant process or separately therefrom.

9. A method as claimed in one of Claims 1 to 8, characterised in that the unprocessed sewage sludge which is to be treated and/or the dried sewage sludge and/or the vapours produced during the drying process are in each case subjected to intermediate storage.

## Revendications

1. Procédé pour l'utilisation de boues de curage, au cours duquel la boue de curage est séchée et brûlée, dans lequel le séchage a lieu en utilisant de la chaleur produite dans une zone où existe une puissance de chauffe et dans lequel un combustible est brûlé dans un foyer intercalé à la suite de la zone de puissance de chauffe pour réduire l'oxyde d'azote formé dans la zone de puissance de chauffe, procédé caractérisé en ce que :
- la zone de puissance de chauffe est placée dans le générateur de vapeur d'une centrale de force motrice alimentée par des combustibles fossiles,
- le séchage est effectué par échange thermique indirect avec de la vapeur se condensant à partir du circuit eau-vapeur du procédé de la centrale de force motrice, et
- les fumées formées lors du séchage sont introduites dans le foyer pour la réduction de l'oxyde d'azote.

2. Procédé selon la revendication 1, caractérisé en ce que les gaz brûlés chargés de poussière, se produisant pendant la combustion des boues de curage, sont mélangés aux gaz brûlés chargés de poussière du procédé de la centrale de force motrice effectué par les combustibles fossiles.

3. Procédé selon la revendication 1, caractérisé en ce que les gaz brûlés, produits pendant la combustion des boues de curage, sont soumis à un dépoussiérage et sont mélangés aux gaz brûlés du procédé de la centrale de force motrice exploité avec des combustibles fossiles.

4. Procédé selon une des revendications 1 à 3, caractérisé en ce que la combustion des boues de curage se fait à des températures supérieures au point de fusion des cendres.

5. Procédé selon une des revendications 1 à 3, caractérisé en ce que les cendres produites lors de la combustion des boues de curage sont fondues par utilisation de la capacité calorifique des gaz de fumées très chauds provenant du procédé de la centrale de force motrice à combustible fossile.

6. Procédé selon les revendications 4 ou 5, caractérisé en ce que la fusion des cendres des boues de curage est effectuée en plusieurs étapes de températures.

7. Procédé selon la revendication 1, caractérisé en ce que les boues de curage séchées sont alimentées à la zone de puissance de chauffe d'une centrale de force motrice fonctionnant au charbon.

8. Procédé selon la revendication 7, caractérisé en ce que les boues de curage séchées sont broyées ensemble avec le combustion destiné au procédé de la centrale de force motrice ou bien séparément de lui.

9. Procédé selon une des revendications 1 à 8, caractérisé en ce que les boues de curage brutes à traiter et/ou les boues de curage séchées et/ou les fumées se produisant pendant le séchage sont soumises respectivement à un stockage intermédiaire.
